(19) Europäisches Patentamt
European Patent Office
Office européen des brevets

(11) **EP 2 433 029 B1**

(12) **EUROPEAN PATENT SPECIFICATION**

(45) Date of publication and mention
of the grant of the patent:
**22.10.2014 Bulletin 2014/43**

(51) Int Cl.:
*H02K 7/09* *(2006.01)*      *F16F 15/18* *(2006.01)*
*F16F 15/00* *(2006.01)*

(21) Application number: **10723511.1**

(86) International application number:
**PCT/EP2010/003013**

(22) Date of filing: **17.05.2010**

(87) International publication number:
**WO 2010/133332 (25.11.2010 Gazette 2010/47)**

(54) **DEVICE, METHOD AND PROGRAM FOR AUTOMATIC CONTROL COMPUTERS FOR ELECTROMAGNETIC DAMPERS**

**VORRICHTUNG, VERFAHREN UND PROGRAMM ZUR AUTOMATISCHEN STEUERUNG VON COMPUTERN FÜR ELEKTROMAGNETISCHE DÄMPFER**

**DISPOSITIF, PROCEDE ET PROGRAMME POUR ORDINATEURS DE COMMANDE AUTOMATIQUE POUR AMORTISSEURS ELECTROMAGNETIQUES**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **22.05.2009 IT TO20090389**

(43) Date of publication of application:
**28.03.2012 Bulletin 2012/13**

(73) Proprietor: **Rolls-Royce PLC**
**London SW1E 6AT (GB)**

(72) Inventors:
• **TONOLI, Andrea**
**I-10051 Avigliana (TO) (IT)**
• **SILVAGNI, Mario**
**I-13897 Occhieppo Inferiore (BI) (IT)**

(74) Representative: **Hill, Matthew Ross et al**
**Rolls-Royce plc**
**Patents Department (SinB-38)**
**PO Box 31**
**Derby DE24 8BJ (GB)**

(56) References cited:
**EP-A1- 0 049 300      US-A- 5 126 641**
**US-A- 5 880 550**

EP 2 433 029 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND OF THE INVENTION

This invention relates to the field of the automatic control devices and, more particularly, to an automatic control device for electromagnetic dampers and to the related method of controlling and to the program for the associated computer.

TECHNICAL FIELD

It is known that in many applications that use rotating machines some electromagnetic dampers for reducing the vibrations during the operation are required.

For some particular applications, the common vibration of a rotating machine is not tolerable; among the potential examples of said applications are also included the applications of industrial machines, tools with high-speed rotating parts and aeronautical applications.

Typically, the rotating machines vibrate because all their rotating parts (commonly indicated as rotor), encapsulated inside a fixed stator, are not perfectly balanced; the unbalance of said parts generate during the rotation a variable force of direction that produces a vibration inside the machine itself.

Said vibration can vary with the variation of the rotating speed of the rotating parts of the machine and, equally, have one or more peaks stable to a particular frequency of rotation of the rotor, usually corresponding to the eigenvalue or the eigenvalues of the rotating machine itself or of the group of the machine and of the system handled by it.

Economically, it is much more convenient to use an electromagnetic damper rather than to cope with a meticulous mechanic balance of the rotating parts of the machine. Actually, said balance is often obtained by positioning appropriate weights arranged in an eccentric way on the rotor, and it cannot be the same for each rotating machine; on the contrary, it must be singularly executed upon each produced rotating machine.

The electromagnetic dampers represent a much more economic alternative, because they can be arranged in series, on the assembly line without heavy economic charges.

An electromagnetic damper typically comprises a magnetic circuit arranged around a rotating part of the machine, that hereinafter will be called rotor for the sake of brevity, often contained inside the stator of the rotating machine itself.

Said magnetic circuit is usually divided into at least two parts, of which one is fixed upon the rotor and rotates with it whereas a second one is fixed upon the stator.

Upon the fixed part of the magnetic circuit are wound up one or more windings of electrically conductor material (for example copper), within which flows an electric current.

Between the two parts of the magnetic circuit there is an air gap of a substantially annular form, that as a consequence of the vibrations of the rotor of the machine temporarily reduces or extends its thickness, causing a variation of the electric current that flows among the windings and, therefore, a variation of the damping force produced by the electromagnetic damper.

It is also known that the traditional electromagnetic dampers are controlled by some sensors of speed, acceleration and position of the rotor of the rotating machine.

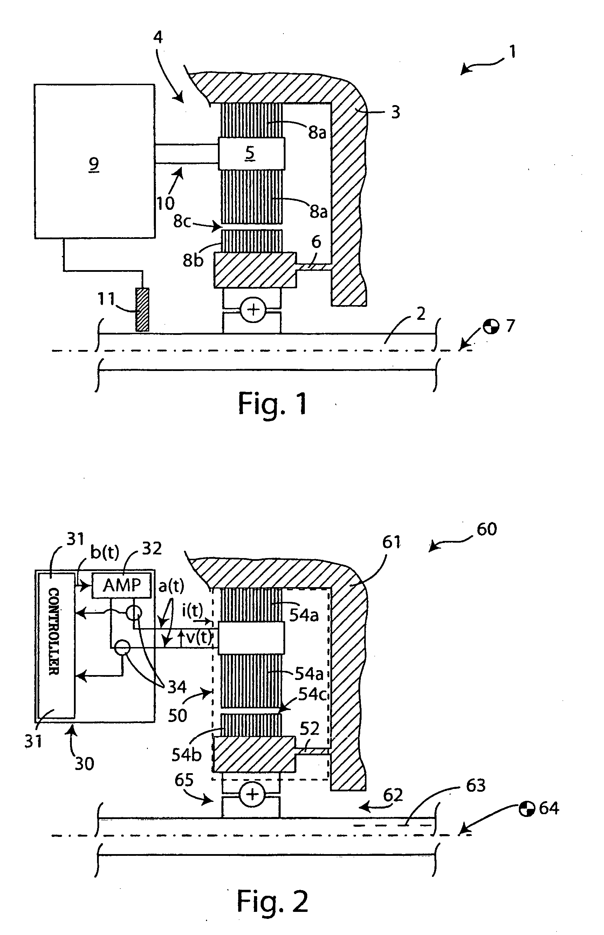

For example, in figure 1, a rotating machine 1 comprising a rotor 2 schematized for the sake of simplicity with a rotating shaft and a stator 3 is shown; the rotating machine 1 is provided with an electromagnetic damper 4.

The electromagnetic damper 4 comprises:

- a plurality of windings 5, constituted by a low ohmic loss electric conductor wound up many times on the rotating shaft and insulated on its external surface by a film of electrically insulating material;
- a spring 6, for supporting the rotating shaft along a direction substantially parallel to a rotation axis 7 of the electromagnetic damper 4 and for acting as centering elastic means in a direction substantially orthogonal to the rotation axis 7 itself; and
- a magnetic circuit 8, constituted by a first external part 8a and a second internal part 8b separated between them by an air gap 8c and creating two concentric rings respectively.

The electromagnetic damper 4 is controlled by an automatic control system 9, for supplying the winding 5 by means of a plurality of electric wires 10.

The automatic control system 9 receives one or more signals of position, speed and acceleration of the rotor 2 by means of a sensor or a plurality of sensors 11 arranged on the rotor itself.

Said sensors 11, for the sake of convenience represented in figure as a single piece but also installable in higher quantities, are for example:

- capacitive sensors of position, wherein a modulation of the electric capacity can be induced by the movement of one of the armatures of a capacitor toward the other that remains fixed upon the stator, or wherein the capacitive coupling between two fixed armatures can be varied by means of a third movable armature;
- optical sensors of rotation (encoder), that translate the rotation of the rotor into digital signal and wherein, by means of subdivisions into optically different sectors the angular position of the rotor toward an arbitrary origin can be codified;
- Hall effect magnetic sensors, wherein an electric current is induced, by means of a magnet arranged on the rotor 2, inside one or more turns electrically connected to the automatic control system 9.

Said automatic control systems 9 show some disadvantages.

As a matter of fact, the precision and the accuracy of the measurement of the position of the rotor 2, and therefore the consequent precisions and accuracies of correction of the electric current induced in the windings 5 of the electromagnetic damper 4, depend on the precision with which the sensors 11, that usually show a movable part fixed on the rotor and a fixed part fixed instead on the stator, are mounted.

The movable part can be subjected to movements, and this, in case of capacitive sensors, can cause a wrong reading of the capacitive variation with the consequent staggering of the measurements of position, speed and acceleration of the rotor 2..

In case of Hall effect sensors, the movement of the movable part of the sensor can originate many currents induced inside the turn, again globally compromising the precision of the control of the electromagnetic damper 4.

Finally, in case of optical-type sensors a positive or negative polarization of the angle of the rotor 2 toward the stator 3 can be caused, even in this case originating wrong measurements.

Moreover, the use of sensors can be particularly expensive when positions, speeds and accelerations of rotors 2 of machines functioning on a very wide interval of rotation speed have to be measured, because it is necessary that both the sensor 11 and the automatic control system 9 guarantee a high precision even with very sudden signal variations, induced by the high rotation speed of the rotor 2.

Moreover, in order to guarantee a high precision of measurement of the parameters of the rotor 2 is often therefore necessary to turn to some automatic control systems 9 with high sampling frequency that need many sensors 11 radially arranged around the shaft for functioning in the correct way.

Particularly, furthermore, the Hall effect sensors can acknowledge external magnetic inductions, and cause measurements that are at least constantly polarized, if not even changeable in time and with the rotation speed.

Finally, concerning the optical sensors, their resolution is determined by the kind of codification and by the fineness of the subdivision into sectors, as well as by the kind of light source (LED, laser diode...) and by the kind of revelator (photodiode, phototransistor...) used.

Moreover, some disadvantages concerning the use of traditional sensors 11 consist in the fact that they cannot correctly find the correction of the damping to actuate when there are flexions of the rotating shaft. In this case, as a consequence of the flexion may occur that the sensor measures the movement of the shaft in a direction given by the flexion, when if the rotating shaft were straight, it would be moved in the opposite direction. In this case, there is the serious risk of destabilizing the system composed by the rotating machine and the electromagnetic circuit.

Lastly, many sensors 11 must be present with the known systems in order to satisfy multiple degrees of freedom possessed, for example, by a rotating shaft that is suspended on an electromagnetic damper for each of its two ends.

This implies the necessity of a careful planning of the automatic control system 9 and the use of extremely expensive sensors, when it is wanted to obtain performances sufficient for ensuring a high precision and accuracy of the individuation of the shaft position.

Document US 5126641 discloses such a device according to the preamble of claim 1.

DISCLOSURE OF THE INVENTION

The object of the present invention is to realize an automatic control device for electromagnetic dampers, that is free from the above-described disadvantages.

Another object of the present invention is to provide an automatic control method for electromagnetic dampers, that is free of the above-described disadvantages.

A third object of the present invention is to provide a computer program for performing the above outlined method by means of a software procedure.

According to the present invention, a device, a method and a computer program for the automatic control for electromagnetic dampers are realized and provided as claimed in claims one, twelve and nineteen.

DESCRIPTION OF THE DRAWINGS

The invention will be now described with reference to the appended drawings, that illustrate a not restrictive example of embodiment, wherein:

- the figure 1 shows a section of part of a rotating machine wherein an automatic control device for electromagnetic dampers of a known kind is illustrated;
- the figure 2 shows a section of a part of a rotating machine wherein a first embodiment of an automatic control device according to the present invention is illustrated;
- the figure 3 shows a block diagram of part of the automatic control device shown in figure 2;
- the figure 4 shows a section along the line IV-V of the device of figure 3;
- the figure 5 shows a second embodiment of an automatic control device;
- the figure 6 shows a couple of signal waveforms of voltage and current delivered by the automatic control device of figure 5;
- the figure 7 shows an alternative couple of signal waveforms of voltage and current delivered by the automatic control device of figure 5;
- the figures 8a and 8b show a signal waveform of electric current before the processing of the device of figure 5 and in an intermediate stage of processing respectively;
- the figure 8c shows an energy spectrum of the signal of figure 8b;
- the figure 9 shows a third embodiment of an automatic control device;
- the figure 10 shows a detail of an amplifier comprised within a preferred embodiment of the device according to the present invention; and
- the figure 11 shows a couple of signal waveforms of electric current and voltage delivered by the automatic control device of figure 9 respectively.

## DETAILED DESCRIPTION OF A FIRST EMBODIMENT OF THE INVENTION

With reference to figure 2, an automatic control device in a first preferred embodiment is generally designated with the reference number 30. The automatic control device 30 is designed to control an electromagnetic damper 50 installed on a rotating machine 60 having a stator 61 and a rotor 62 comprising at least a shaft 63 rotating around a rotation axis 64 and splined on at least a low friction support 65 (preferentially a ball or roller bearing).
The electromagnetic damper 50 comprises:

- a plurality of windings 51, constituted by a low ohmic loss electric conductor wound up many times on the rotating shaft 63 and insulated on its external surface by a film of electrically insulating material and supplied by an electric signal;
- a spring 52, for supporting the rotating shaft along a direction substantially parallel to a rotation axis 64 of the electromagnetic damper 50 and for acting as centering elastic means in a direction substantially orthogonal to the rotation axis 64 itself; and
- a magnetic circuit 54, constituted by a first external part 54a and a second internal part 54b separated between them by an air gap 54c and creating two concentric rings respectively.

As any system that can be analytically represented, the electromagnetic damper 50 namely has a proper transfer function H(s), mathematical representation of the relationship between an output (that is the action of damping) and an input (electric signal that supply the plurality of windings 51) of the system itself, that is not known a priori, because its parameters depend on the characteristics of the rotating machine 60 upon which it is installed, as well as on the position of the rotor 62.
In detail, the automatic control device 30 is capable of controlling only the component of the vibration of the rotor 62 of the rotating machine 60 and not the stability of the electromagnetic damper 50 along with the rotor 62. In fact, the electromagnetic damper 50 is provided with the spring 52 that allows to realize a stable system. If the electromagnetic damper 50 were free from the spring 52, it would be an instable system, because with the minimum variation of the centering of the shaft 63 of the rotor 62 in comparison with the magnetic circuits 54a, 54b, an attraction force that would pull the shaft 63 against the second part of the magnetic circuit 54b would occur. Control devices for dampers free from spring are much more limited on the damping performances, because part of their aim is mainly to maintain the system stable and they are not producible in industrial series because the tuning of all the operating parameters must be substantially manually executed for each rotating machine. According to the present invention, the control device 30 being exclusively capable of being installed for controlling electromagnetic dampers 50 provided with the spring 52, allows instead to concentrate its performances only on the damping, and not on the maintenance of the stability of the rotor 62.
The transfer function H(s) of the electromagnetic damper 50 allows to determine the behaviour of the windings 51 (for example in terms of absorbed electric current and impedance shown) with the variation of vibration frequency and intensity of the rotor 62 of the rotating machine 60; in fact, the impedance (and particularly the inductance) of the windings 51 varies as the dimensions of the air gap 54c vary. It is known that the necessary minimum number of the windings 51 so that the electromagnetic damper 50 can operate is four, and in this case it is convenient to arrange said windings 51 at 90° to each other; owing to this reason a vibration of the rotating shaft 63 can temporarily reduce the air gap 54c toward one of the windings 51, consequently increasing the air gap itself toward the others and particularly toward the opposed winding.
The automatic control device 30 does not use the traditional sensors arranged on the rotor 62 of the rotating machine 60, and in an its first embodiment, it operates according to an observer method.
The transfer function H(s), as well as the position of the rotor 62, are therefore synthesized (estimated) by means of the automatic control system 30.
In detail the automatic control device 30 comprises a control block 31 and an amplifier 32; the control block 31 has an output electrically connected to an input of the amplifier 32, that in turn has outputs 32a that supply the windings 51. The control block 31 receives at its input one or more electric signals a(t) with voltage v(t) and/or current i(t) component, drawn from the outputs 32a of the amplifier 32 by means of a sensible element 34 capable of measuring the variations of the electric current. In this way the automatic control device 30 does not need anymore the traditional sensors that allow to find out the mechanical position of the rotating shaft 63.
For the sake of simplicity of dealing with the description that follows, it is supposed that the signal a(t) drawn from the sensible element 34 is equal to the corresponding voltage v(t) or current i(t) value on the output 32a of the amplifier 32, i.e. that the sensible element 34 is characterized by a null systematic error.

The aim of the control block 31 is to generate a signal b(t) of voltage or current to send to the input of the amplifier 32 whose instantaneous value depends on the current and/or voltage of the electric signal a(t) present on the output 32a of the amplifier 32 and on the signal b(t) itself. In other words, the control block 31 is capable of predicting how the signal b(t) must be in a next time, realizing therefore a reaction loop.

The amplifier 32 transforms the signal coming from the control block 31 into an electric signal with sufficient power to drive the resistive and reactive charge presented by the windings 51. In detail the amplifier 32 is a transconductance or transresistance amplifier. If the amplifier 32 is of transconductance type, it imposes an output current on the outputs 32a and is driven by a voltage determined by the control block 31; for this reason the gain of the amplifier is a transconductance gain $g_m$, measured in Siemens. If the amplifier 32 is of transresistance type, it is driven by a current and generates an output voltage. For this reason its gain will be on the other hand a transresistance gain $r_m$, measured in Ohm.

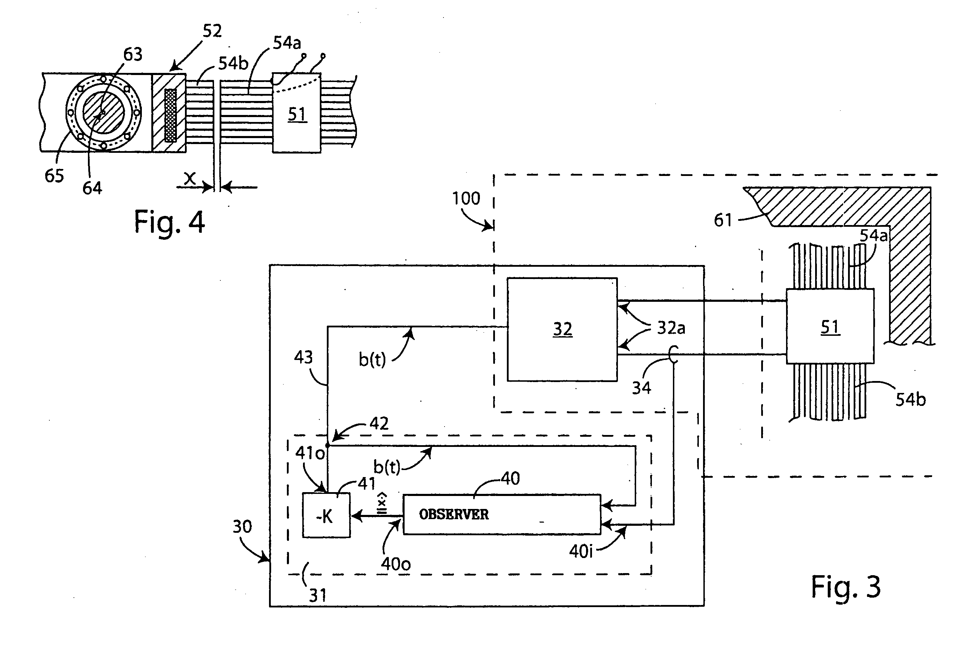

As shown in figure 3, the control block 31 comprises an observer stage 40 and a compensation stage 41. In detail, the observer stage 40 has:

- a couple of inputs 40i connected to one of the outputs 32a of the amplifier 32 and to a node 42 respectively; and
- an output 40o, that is directly connected to an input 41i of the compensation stage 41.

The compensation stage 41 also comprises a respective output 41o upon which there is the signal b(t), connected to the node 42, that is also connected by means of a line 43 to the input of the amplifier 32.

If considered together, the electromagnetic damper 50, the rotating machine 60 and the amplifier 32 constitute a system identified in figure 3 with the numeral 100 for the sake of convenience of representation having a plurality of operating states $X$, usually represented by a vector of numbers $X = \{x_1, x_2, ..., x_n\}$. Said states are not accessible but are estimated by the observer stage 40, that generates on its output 40o an estimation $\hat{X} = \{\hat{x}_1, \hat{x}_2, ..., \hat{x}_n\}$ of the vector of states $X$ of said system. This operation is performed through a reduced measurement number by means of a real time analogical and/or numeric processing of the signals present on the plurality of inputs 40i of the observer stage 40.

In detail, if the amplifier 32 is a current amplifier (regardless of the fact that it is driven in voltage or current) the vector of states $X$ must include at least two states corresponding to the distance between the rotating shaft 63 and the magnetic circuit 52b (as shown in figure 4) and the corresponding first derivative respectively.

On the contrary, if the amplifier 32 is a voltage amplifier (regardless of the fact that it is driven in voltage or current) the vector of states $X$ must include, in addition to the two previous states, also the current value i(t) of the signal b(t) given on the outputs 32a.

Even if in the figures attached to the present description it is shown only one winding 51 for the electromagnetic damper 50, it is clear that the current value i(t) of the signal a(t) shall be referred to each of the outputs 32a connected to each of the windings 51 present on the damper itself. This means that, for example with four windings 51, the measurements of four current values i(t) are required and they will be also different between each other.

In detail, the current i(t) is composed by:

- a first component $i_o$ that represents an original electric current induced into the windings 51; and
- a second component $i_r$ that represents a differential current (therefore positive or negative) that algebraically adds up to the previous first component $i_o$ and that is related to the "correction" imposed by the automatic control device 30 as a consequence of the vibrations of the rotating shaft 63.

The system 100 consequently receives at its input the signal b(t) present on the output 41o of the compensation stage 41 and has a corresponding output with the signal drawn from the sensible element 34.

The system 100 can be mathematically described by a system of equations:

$$\begin{cases} \dot{X} = AX + Bb(t) \\ i(t) = CX \end{cases}$$

wherein $\dot{X}$ represents the time derivative of the plurality of states $X$ of the system 100, and wherein, according to the normal theory of control systems, A is a dynamic matrix of the system 100, B is said matrix of action of the system 100 and C is an output matrix of the system 100.

The operation performed by the observer stage 40 consists of generating an estimation $\hat{X}$ of the states of the system 100, that is given by the following mathematical equation:

$$\dot{\hat{X}} = AX + Bb(t) + L(i(t) - \hat{i}(t))$$

wherein $\dot{\hat{X}}$ represents the time derivative of the estimation $\hat{X}$ of the states of the system 100.

The matrices A, B, C, and L of the system are obtained from the differential equation that rules the movement of the rotating shift 63 subjected to the action of the electromagnetic damper 50, with the help of the differential equation that rules the forces acting on the system and with a linearization of the behaviour of the rotating machine 60 together with the electromagnetic damper 50 around a predetermined equilibrium point. Said equilibrium point is defined by the condition $X = \hat{X} = 0; v(t) = v_0; i_0 = v_o/R$ , wherein R is the electric resistance of the winding 51.

Finally, the matrix L contains some indicator parameters of the convergence speed of the automatic control device 30; an eventual variation of said parameters allows to adapt the automatic control device 30 to the movement of the rotating shaft 63 more or less quickly.

In detail, considering the rotating shaft 63 having a weight m, by indicating with F a force exerted by the magnetic circuit 54 on the rotating shaft 63, and by indicating with x the movement of the shaft 63 toward the magnetic circuit 54 (see figure 4) and, as $\dot{x}, \ddot{x}$ the first derivative (movement speed) and second derivative (acceleration) in time respectively, said equation shows the following form:

$$m\ddot{x} + kx + 2k_x x = F + 2k_m i$$

wherein $k_x$ represents the negative elastic constant of the electromagnet (considered alone it would tend to destabilize the system because of the reasons above described and, therefore, it has a negative value), k is the elastic constant of the spring 52 of the electromagnetic damper 50, F is a generic unbalance force and $k_m$ is a positive current-force factor, deriving from the feeding of the electric current to the winding 51, that models the generation of a force on the rotating shaft 63 as the electric current i(t) increases or diminishes within the winding 51. The numerical factor 2 derives from the multiplicity of windings on the axis of direction on which the x is measured.

The force exerted by the magnetic circuit 54 on the rotating shaft 63 is given by the components $k_m$*i and $k_x$. Furthermore, k must satisfy a requirement called of "critical stability", i.e. $k > |2k_x|$.

Considering that each winding 51 receives an electric current *i (t)* and presents an inductive component $L_0$ and a resistance R, the voltage *v(t)* on its ends is given by:

$$L_0 \frac{di}{dt} + Ri + k_m \cdot \frac{dx}{dt} = v(t)$$

from which it can be deduced that the dimensional variation of the air gap 54c gives rise to a variation of the inductance presented by the winding 51 and, consequently, by a voltage variation at the ends of the same used for the correction of the damper.

In detail, therefore, on the output 40o of the observer stage 40, the first time derivative of the estimation of the states of the system 100 is presented. The compensation stage 41 on the basis of said derivative of the estimation of the states generates instead the signal b(t) by means of the following equation:

$$b(t) = -K\hat{X} = k_x k_{\dot{x}} \left\{ \begin{array}{c} \hat{x} \\ \dot{\hat{x}} \end{array} \right\}$$

The control block 31 presents its convergence speed, defined by the parameters of the matrix L, i.e. its time interval necessary so that the output b(t) is in a steady state condition. Said convergence speed is determined on the basis of multiple considerations among which there is also the noise of the sensitive element 34 and, generally, the more it is noisy the less there is the possibility of speeding up the device 30 without causing a non tolerable uncertainty on the estimation $\hat{X}$ of the states of the system 100. As a matter of fact, said uncertainty casually moves the estimation $\hat{X}$, sample by sample, away from the real value.

Therefore, if the parameters of the matrix L are too high, the system converges very fast but is also rather noisy; on the contrary, a matrix L having very low parameters, generates a very accurate response of the device 30, but less capable to follow the sudden variations of the shaft vibrations.

In detail, both the observer stage 40 and the compensation stage 41 present their own convergence speeds and, in order that the control block 31 does not globally result as instable, the compensation stage 41 must converge more slowly than the observer stage 40.

From experimental analysis, it has been observed that according to the first embodiment of the present invention, even without the optimization of the constants $k_m$, k, $k_x$ specifically carried out on the rotating machine 60 upon which it is installed, the device 30 allows to obtain in any case a damping of the vibrations of the rotating machine 60, without compromising in no way the stability of the machine itself. The same technical experiments demonstrated that an effective damping activity exists even with the 100% variation of the numeric value of the previous parameters in comparison with an optimal value of the same.

In conclusion, therefore, the first embodiment of the present invention uses the dimensional variation of the air gap and, consequently, the variation of the inductance shown at the ends of the winding 51 in order to allow an indirect correction of the damper by means of a filtering action.

## DETAILED DESCRIPTION OF A SECOND EMBODIMENT OF THE

## INVENTION

A second embodiment of the automatic control device 30' differs from the one above described because it is based on the analysis of the *ripple* (or periodic oscillation) of the signal *a (t)* present on the outputs 32'a of the amplifier 32'; in detail, the oscillation of the signal a(t), always given by the inductance variation at the ends of the winding 51, is directly used in this case for the control of the damper.

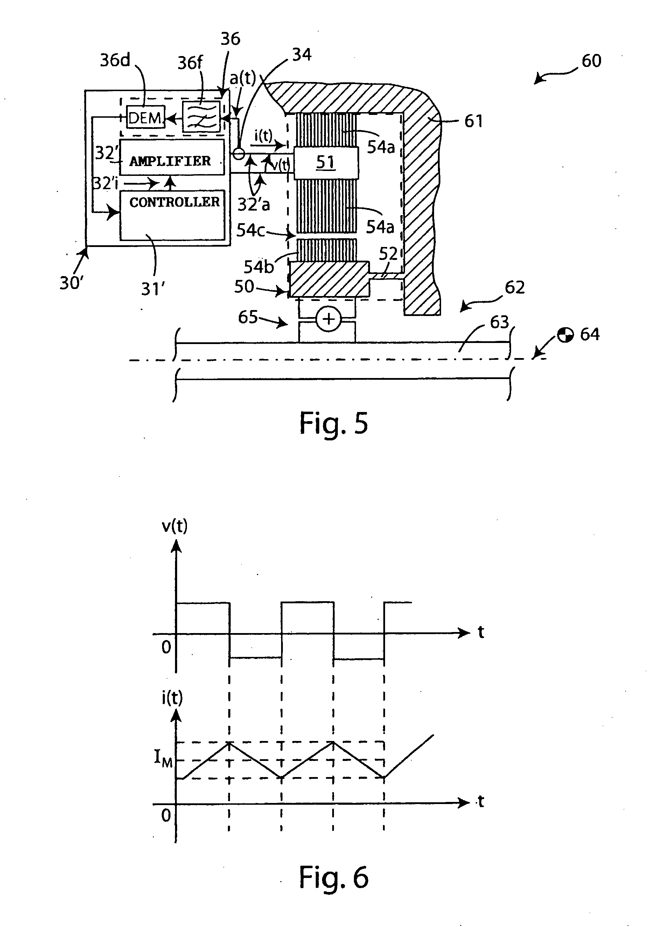

Also in the second embodiment, as shown in figure 5 by means of a block diagram, the automatic control device 30' comprises:

- an amplifier 32' having at least an input 32'i and some outputs 32'a electrically connected to the windings 51 of the electromagnetic damper 50;
- a control block 31' having an output electrically connected to the input 32'i of the amplifier 32';

and estimates the position of the movable part of the magnetic circuit 54 on the basis of the electric variables and without knowing the dynamic of the rotor 62 of the rotating machine 60.

The second embodiment of the device 30' differs from the first because it does not require the a priori knowledge of the operating parameters of the rotating machine 60 and of the electromagnetic damper 50, ki, $k_x$, $k_m$. The control of the electromagnetic damper 50 is exclusively performed by means of measurements of the voltage v(t) or current i(t) of the signal b(t) present on the outputs 32'a of the amplifier 32'.

An element 34 sensible to the passage of electric current is arranged on at least one output 32'a of the amplifier 32' and provides an electric signal on the input of a filtering stage 36; the filtering stage 36 also presents an output directly connected to an input of the control block 31'.

More specifically, the oscillations of the electric current *i(t)* induced within the windings 51 are used in order to estimate the position of the second part 54b of the magnetic circuit (and therefore of the rotor 62 of the rotating machine 60) in comparison with its nominal value.

In detail, if the rotating shaft 63 rotates in a condition purely free of vibrations, the electric current absorbed by each winding would be equal to a constant value $I_0$; on the contrary, the vibrations introduce an electric current $i_r(t)$ variable in time.

This is because the electric current $i_r(t)$ is inversely proportional to the inductance "shown" at the ends of the winding 51; said inductance is also inversely proportional to the size of the air gap 54c toward the considered winding 51; it is namely known that:

$$L \frac{di(t)}{dt} + Ri(t) = e$$

$$L(\Delta d) = \frac{\mu_0 N^2 S}{2 \Delta d}$$

wherein $\Delta d$ represents instead the size variation of the air gap 54c toward the winding 51, $\mu_0$ is the magnetic permeability of the vacuum and N is the number of turns of the winding 51.

Therefore, the electric current absorbed by a winding 51 is equal to

$$i(t) = I_0 + i_r(t)$$

By using an amplifier 32' of switching type, the oscillation of the electric current $i_r(t)$ is used for the estimation of the position of the movable part 54b of the magnetic circuit 54 or, equivalently, of the respective air gap 54c.

In detail, the amplifier 32' of switching type (also known as class D amplifier), is controlled by a pulse width modulation (PWM).

As it is known, in a switching amplifier with a pulse width modulation, the input signal *b(t)* is converted into a sequence of impulses whose average value is directly proportional to the width of the input signal in that moment.

More specifically, as shown in figure 6 the amplifier 32' presents on its outputs 32'a a signal a(t) with square wave voltage having a first logical level and a second logical level alternatively interposed between them. The first and the second logical levels are at a positive and negative voltage respectively having absolute value substantially equal to a value $V_s$. The commutation between said first logical level and said second logical level takes place at a frequency that is equal to the commutation frequency of the amplifier 32', that hereinafter will be designated with $f_{pwm}$.

As it is known, because of the inductance of the windings 51, the electric current i(t) induced to them by the amplifier 32' is not characterized by a square waveform but presents a different waveform. Precisely for this reason, the windings 51 present a respective electric pole R/L substantially given by the relationship between the resistance R of the electric conductor that creates them and their respective inductance L.

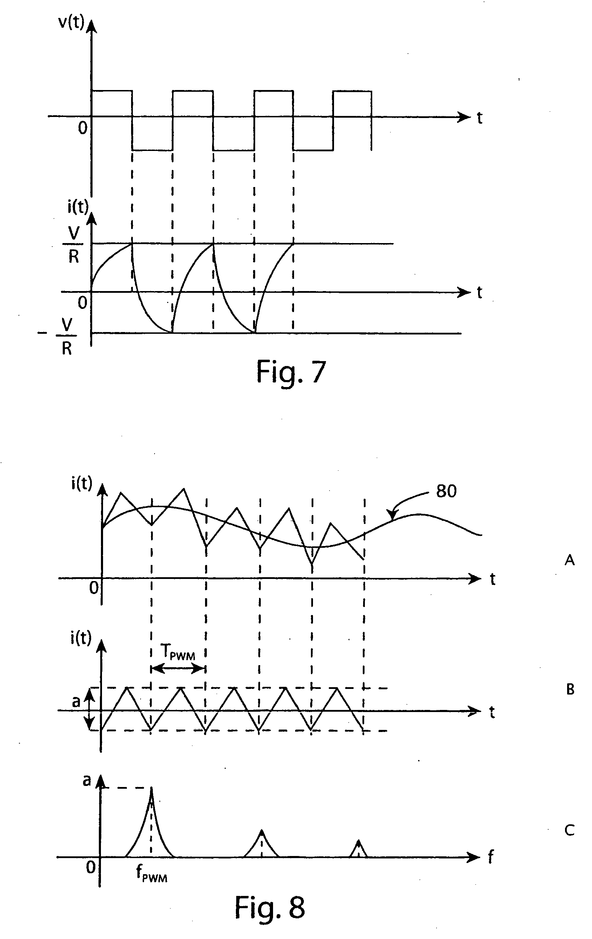

In detail, if the frequency $f_{pwm}$ with which the amplifier 32' of PWM type switches is lower or equal to an electric pole R/L presented by the windings 51, the current i(t) induced to them presents a typical curve with asymptotic progression, shown in figure 7, wherein for each half-cycle of the square waveform of the voltage present on the outputs 32'a, the current increases and diminishes respectively asymptotically tending to a value equal to V/R, wherein V is the voltage supply of the amplifier 32'.

Typically, however, according to the present invention the device (30') has an amplifier 32' whose switching frequency $f_{pwm}$ is superior to the frequency of the electric pole R/L. In this case, therefore, the waveform assumed by the electric current on the winding 51 is of a triangular type, as shown in figure 8, and for each half-cycle presents a rise time substantially equal to the fall time and equal to the relationship between the voltage supply of the amplifier and the value of the inductance L of the windings 51.

Also the frequency $f_a$ of the size variations of the air gap 54c is inferior than the $f_{pwm}$. Consequently, owing to the vibrations of the rotating shaft 63, the electric current i(t) that flows into the windings 51 is also influenced by an oscillation at a lower frequency.

In detail, the figure 8a shows an example wherein the electric current i(t) undergoes a variation given by a vibration having a substantially sinusoidal progress (designated with the numeral 80).

In order to eliminate the low-frequency component, not necessary to the control block 31, the filtering stage 36, presents a high-pass filter 36f and a demodulation block 36d in series, allows to extract the component due to the real control from the signal on the outputs 32'a of the amplifier 32' and detected by the sensible element 34.

The rotating machine 60 is typically insensitive to the frequencies of the PWM modulation, because it presents a cut-off frequency, given by the combination of its mechanical and electric characteristics, that is remarkably lower; therefore, it does not need a filtering on the output branches 32'i directed toward the windings 51, differently from what happens for the reaction control.

As a consequence of the filtering and demodulation process, in figures 8b and 8c, the output signal of the demodulation block 36d presents a spectral component having a main spectrum 81 centered around the commutation frequency $f_{pwm}$ of the amplifier 32'.

Therefore, the control block 31, by measuring the peak width 81a of the main spectrum 80, and knowing a period $T_{PWM}$ expressed in seconds and equal to the inversed switching frequency $f_{pwm}$ is able to determine the vibration width of the rotating shaft 63 by means of the following operation:

$$\tan^{-1} \frac{a}{T_{PWM}/2} = \frac{V}{\mu_0 N^2 S} \Delta x$$

wherein $\mu_0$ represents the magnetic permeability of the vacuum, N the number of turns of the winding 51 and $\Delta x$ the extent of the movement of the rotating shaft 63 toward the considered winding (figure 4).

In case of vibration, an electric signal that derives from the variation of the air gap 54c itself is superimposed to the signal a(t).

DETAILED DESCRIPTION OF A THIRD EMBODIMENT OF THE INVENTION

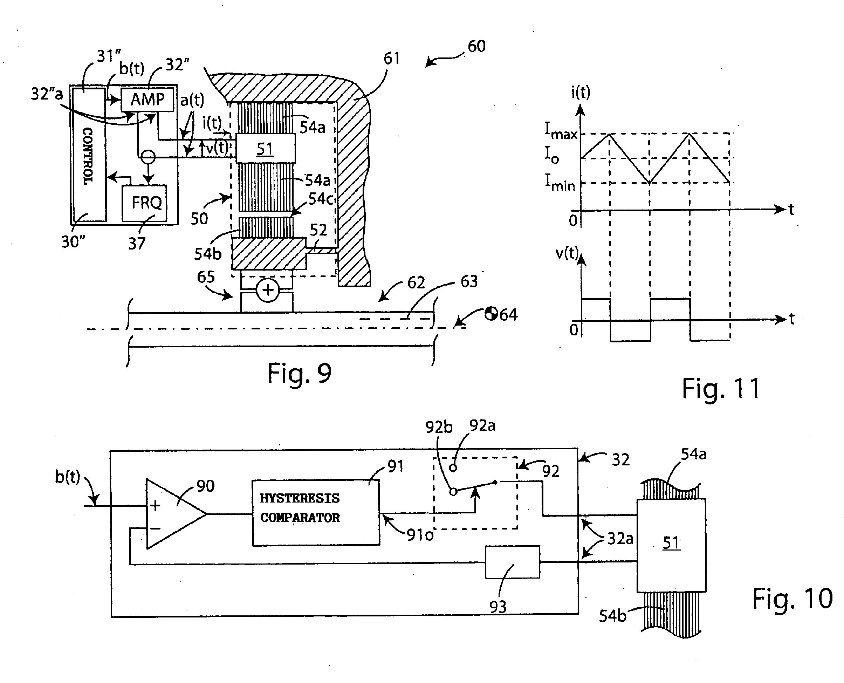

Finally, a third embodiment of the automatic control device 30", shown in figure 9, differs from the second embodiment because of the presence of an hysteresis amplifier 32", that receives a voltage signal b(t) generated by a control block 31" on one of its inputs 32"i; in detail, the control block 31" has an input connected to the output of a frequency sensor 37, having in turn an input directly connected to the sensible element 34 positioned on the outputs 32" a of the amplifier 32".

As shown in figure 10, the amplifier 32" comprises:

- an addition stage 90, having an output connected to
- an hysteresis comparator 91 having in turn an output 91o upon which there is a binary signal able to switch a
- switch 92 between two contacts 92a, 92b upon which there is an alternate voltage (generated by a constant voltage supply stage not shown for the sake of simplicity of representation) having a first positive value and a second negative value that can have both the same and a different module, depending on the need and the specifications of the amplifier 32".

The switch 92 is connected to the outputs 32" a of the amplifier 32" .

The addition stage 90 has a couple of positive and negative inputs receiving the signal b(t) and a backward signal deriving from the output of a current sensor 93 that has an input connected to the output 32" a of the amplifier 32" and, consequently with the winding 51, respectively; the addition stage 90 generates an output signal that is the algebraic sum of the signals presented on its inputs.

In detail, in figure 11, the signal b(t) oscillates between a first positive voltage value and a second negative voltage value when the current i(t) absorbed by the winding 51 exceeds a maximum value $I_{max}$ or, respectively, descends under a minimum value $I_{min}$ predetermined during the designing of the device 30" ; in detail, said maximum and minimum current values are defined at least on the basis of the energetic absorption parameters of the electromagnetic damper 50.

The frequency sensor 37 allows to identify the frequency f with which the rotor 62 vibrates. The more said frequency is high, the more the output voltage generated by the frequency sensor 37 is high; consequently the frequency f is given by:

$$f = \frac{1}{T_{pos} + T_{neg}}$$

wherein $T_{pos}$ represents a time interval necessary so that the signal b(t) passes from a negative to a positive value ("rise time") and $T_{neg}$ represents a time interval necessary so that the signal b(t) passes from said positive value to said negative value ("fall time").

Being the rate with which the current i(t) increases directly proportional to the inductance L, the frequency f is likewise directly proportional to the inductance.

In detail, being the operating frequency f known, the extent of the movement Δx of the rotating shaft 63 toward the considered winding is calculated by the control block 31" by means of a mathematic processing ruled by the following equation:

$$\tan^{-1}(2\Delta i \cdot f) = \frac{V}{\mu_0 N^2 S} \Delta x$$

wherein $2\Delta i$ represents the peak-to-peak width (known) of the signal i(t) present on the outputs 32a of the amplifier 32".

Concerning all the three embodiments of the device (30, 30', 30") up to this point described, the control block can be conveniently realized either on an application specific integrated circuit (ASIC) or substantially as a software program that is made run on a computer provided with appropriate interfaces for detecting the signals to be processed. The choice between the previous solutions can typically - and not necessarily - take into account the designing expenses, the duration of the integrated circuit development and the obtainable speed of the signal processing.

The advantages of the automatic control device for an electromagnetic damper of vibrations are clear according to the description above. Particularly, it allows to control the electromagnetic damper 50 mounted on the rotating machine 60 without the help of sensors positioned in contact to the rotor 62 of it. Therefore, said solution makes it possible to not unbalance further the rotor itself and ensures that the whole sensorial part is enclosed near or even within the device 30 itself; this is particularly advantageous when the device 30 is positioned in a remote position in comparison with the rotating machine 60, because the need for having long cablings in order to interface the sensor to the device itself is eliminated.

Particularly, the device above described allows the real time control of the electromagnetic damper of vibrations and on the basis of a reduced number of measurements in comparison with what there would be with a traditional position sensor.

In detail, the fact that the device, in all of its embodiments described up to this point, is able to control an electromagnetic damper 50 for rotating machines 60 provided with a spring 52, allows to concentrate all the designing efforts into the best possible solution of damping, leaving out an age-old problem such as the stabilization of the rotating shaft 63 in the absence of the spring, because the system 100 is intrinsically stable. Therefore, the device 30, 30', 30" can be advantageously applicable during the industrial process not only on a rotating machine of the same type produced in series (wherein, inevitably, between a part and another, there are some minimal behavioural differences given as a minimum by the mechanical tolerances of processing or designing), but also on different rotating machines with a minimum optimization effort. As a matter of fact, even syntonizing the device 30, 30', 30" for a particular type of rotating machine 60, the usage on a machine substantially different from the first one, does not cause destabilization problems, not even in particular transitory situations, but simply a reduction of the damping optimization. If the electromagnetic damper were free from the spring 52, said industrial applicability would not be in the least practicable because the whole system 100 would be strongly sensible.

Finally, the device 30 described up to this point allows to obviate to the complete knowledge of the mechanical parameters of the position of the rotor 62, such as the speed of rotation, angle and acceleration, enabling to estimate the correction of the electric current to be induced within the windings 51 only on the basis of their absorption at a certain time. As a matter of fact, the device allows, in its first embodiment, to estimate which position the rotor 62 of the rotating machine will have at an immediately following instant in comparison to the actual one, on the basis of a mathematic estimation and observation.

In the second and third embodiment, the device described up to this point allows to estimate and correct the position of the rotor 62 of the rotating machine on the basis of the oscillation analysis of the current absorbed by the windings 51 of the electromagnetic damper. Said analysis is once more performed without complex sensors installed near the rotor 62.

The device previously described, in all of its embodiments is therefore suited to be installed on multiple types of rotating machines and it is able to operate without changes on rotating machines of different size, form and structure, that vibrate even in different ways and have a rotation frequency interval very wide.

Some variants can be applied to the device described up to this point. More particularly, for example, there can be many amplifiers for each winding of the electromagnetic damper; the sensor arranged on the amplifier outputs can be of a different type in comparison with the one previously described.

Techniques of spectral estimation such as the Fast Fourier Transform (FFT) can be conveniently used as an alternative to the filtering and demodulation method described in the second embodiment of the present invention in order to determine the width *a* of the peak.

**Claims**

1. An automatic control device (30) (30') (30") for an electromagnetic damper of vibrations (50) having a plurality of windings (51) arranged around a rotor (62) of a rotating machine (60) and supplied by an electric signal; said electromagnetic damper of vibrations also having a magnetic circuit (54), constituted by a first part (54a) and a second part (54b) separated between them by an air gap (54c); the automatic control device (30) (30') (30") comprises:

   - amplification means (32) (32') (32") for supplying said plurality of windings (51) and having at least an output (32a) (32'a) (32"a); and
   - signal processing means (31) (31') (31") electrically connected to said amplification means (32) (32') (32"); the automatic control device (30) (30') (30") is **characterized in that** said signal processing means (31) (31') (31") supply said amplification means (32) (32') (32") on the basis of an electric signal ($a(t)$) of voltage and/or current drawn on said at least one output (32a) (32'a) (32"a) by one or more sensible elements (34) remote in comparison with said rotor (62) and variable as an inductance of said windings (51) varies.

2. A device (30) (30') (30") according to claim 1, wherein said electric signal (a(t)) varies in time depending on the vibrations of said rotor (62) of said rotating machine (60); said vibrations of said rotor (62) causing a variation of the size of at least a part of said air gap (54c).

3. Device (30) (30') (30") according to claim 2, wherein said air gap (54c) is substantially annular; wherein said first part (54a) is substantially annular and internal in comparison with said second part (54b) and wherein said plurality of windings (51) is arranged around said second part (54b) of the magnetic circuit (54).

4. A device (30) according to claim 3, wherein said signal processing means (31) comprise a plurality of signal processing stages (40, 41) for generating an estimation of the position of the rotor (62) of said rotating machine (60) on the basis of measurements provided by said one or more sensible elements (34) and also for piloting said amplification means (32) on the basis of said estimation.

5. A device (30) according to claim 4, wherein said plurality of signal processing stages (40, 41) comprises an observer stage (40) and a compensation stage (41); said observer stage (40) having a plurality of inputs (40i) and an output (40o); said output (40o) being electrically connected to a node (42) supplied by an output (41o) of said compensation stage (41); said compensation stage (41) also comprising an input directly supplied by said output (40o) of said observer stage (40); said node (42) being also electrically connected to the input of said amplifier (32) by means of a line (43).

6. A device (30) according to claim 5, wherein said plurality of inputs (40i) of said observer stage (40) comprises a first input supplied by said node (42) and a second input supplied by said sensible element (34).

7. A device (30) according to claim 6, wherein said compensation stage (41) supplies its said output (41o) with said signal ($b(t)$) and wherein the general behaviour of a general system (100) constituted by the electromagnetic damper (50), by the rotating machine (60) and by said amplifier (32) is standardized by means of a plurality of operating states whose at least a part is measured by said one or more sensible elements (34) and wherein said observer stage (40) calculates a vector of values ($\hat{X}$) containing an estimation and related derivative of at least part of said plurality of operating states of said general system (100) depending on a plurality of multiplication matricial parameters (A, B, C, L, K) and wherein said compensation stage (41) generates said signal b(t) by multiplying said vector of values ($\hat{X}$) with a vector (k) of compensation coefficients.

8. A device (30') 30") according to claim 3, wherein said signal processing means (31) are capable of supplying the input of said amplification means (32') (32") on the basis of a periodic oscillation of said signal ($a(t)$), and wherein said amplification means (32') (32") are of switching type.

9. A device (30') according to claim 8, wherein said amplification means (32') are of a pulse width modulation type and supply the outputs (32'a) of said amplification means (32') with an electric signal **characterized by** an electric voltage having a first logical level and a second logical level different and alternating between them.

10. A device (30') according to claim 9, wherein said sensible elements (34) supply an input of a filtering stage (36) having an output connected at its input to said signal processing means (31'); said filtering stage (36) comprising a filter (36f) having an output connected to an input of a modulator/demodulation block (36d); said filter (36f) transmits as output a part of said signal (a(t)) related to the control performed by said signal processing means (31') by means of a frequency-selective filtering.

11. A device (30") according to claim 8, also comprising a frequency identification block (37) and wherein said amplifier (32") is an hysteresis amplifier; said frequency identification block (37) having an input directly connected to said sensible elements (34) and an output directly connected to said signal processing block (31").

12. A control method for an electromagnetic damper of vibrations (50) having a plurality of windings (51) arranged around a rotor (62) of a rotating machine (60) and supplied by an electric signal; said electromagnetic damper of vibrations also having a magnetic circuit (54), constituted by a first part (54a) and a second part (54b) separated between them by an air gap (54c); said method comprising a step of control of amplification means (32) (32') (32") of a device (30) (30') (30"), said amplification means (32) (32') (32") being capable of supplying said plurality of windings (51) and being connected to signal processing means 31) (31') (31"); said method being **characterized by** a step of sending a signal *(b(t))* from the signal processing means (31) (31') (31") to said amplification means (32) (32') (32"), depending on a voltage and/or current signal *(a(t))* drawn on at least one output (32a) (32'a) (32"a) of said amplification means (32) (32') (32") by means of one or more sensible elements (34) remote in comparison with said rotor (62).

13. A method according to claim 12, wherein said signal *(a(t))* is modified by the inductance variation of said plurality of windings (51).

14. A method according to claim 12, comprising also the steps of:

- standardization of the behaviour of a general system (100) constituted by the electromagnetic damper (50), by the rotating machine (60) and by said amplifier (32) by means of a plurality of operating states whose at least a part is measured by said one or more sensible elements (34); and
- calculation of an estimation of the future position of said rotor (62) by means of said signal processing means (31);

15. A method according to claim 14, wherein said step of estimation calculation is carried out by said signal processing means (31) by means of:

- a first step comprising the calculation, of a vector of values $(\hat{X})$ containing an estimation and related derivative of at least part of said plurality of operating states of said general system (100) depending on a plurality of multiplication matricial and/or vectorial parameters (A, B, C, L, K) ; said calculation being operated by an observer stage (40);
- a subsequent calculation step wherein, by means of a compensation stage (41), said signal *b(t)* is generated by multiplying said vector of values $(\hat{X})$ with a vector (K) of compensation coefficients.

16. A method according to claim 12, wherein the input supplying of said amplification means (32') (32") is carried out by said signal processing means (31') (31") that consider a periodic oscillation of said signal *(a(t))* and wherein said amplification means (32') (32") are of a switching type.

17. A method according to claim 16, also comprising a step of supplying said windings by means of said amplification means (32') of a pulse width modulation type (PWM), that supply their said outputs (32'a) by means of an electric signal having a voltage **characterized by** a first logical level and a second logical level different and alternating between them.

18. A method according to claim 16, wherein:

- said windings (51) are supplied by hysteresis amplification means (32") which supply their outputs (32"a) with a signal *(b(t))* having a tension that switches between a first positive logical value and a second negative logical value on the basis of the overrun of a maximum and a minimum value of current absorbed by said windings (51) respectively; and wherein
- a step of analysis of a variation frequency of the electric current absorbed by said windings (51) by means of a frequency identification block (37) supplied by said sensible elements (34) is present; said variation frequency of said electric current being inversely proportional to the vibration of said rotor (62).

19. A computer program comprising code means adjusted for carrying out all the steps defined in claim 12, wherein said signal processing means (31) (31') (31"), for processing said signal *(a(t))* are at least partially of software type.

**Patentansprüche**

1. Automatische Steuervorrichtung (30) (30') (30") für einen elektromagnetischen Dämpfer von Schwingungen (50) mit einer Mehrzahl von Windungen (51), die um einen Rotor (62) einer Drehmaschine (60) angeordnet sind und durch ein elektrisches Signal versorgt werden; wobei der elektromagnetische Dämpfer von Schwingungen ferner einen Magnetkreis (54) aufweist, der durch einen ersten Teil (54a) und einen zweiten Teil (54b) gebildet wird, die voneinander durch einen Luftspalt (54c) getrennt sind; wobei die automatische Steuervorrichtung (30) (30') (30") folgendes umfasst:

- Verstärkungseinrichtungen (32) (32') (32") für die Versorgung der Mehrzahl von Windungen (51) und mit mindestens einem Ausgang (32a) (32a') (32a"); und
- Signalverarbeitungseinrichtungen (31) (31') (31"), die mit den Verstärkungseinrichtungen (32) (32') (32") elektrisch verbunden sind; wobei die automatische Steuervorrichtung (30) (30') (30") **dadurch gekennzeichnet ist, dass** die Signalverarbeitungseinrichtungen (31) (31') (31") die Verstärkungseinrichtungen (32) (32') (32") auf der Basis eines elektrischen Signals (a(t)) der Spannung und/oder des Stroms versorgen, die bzw. der an dem mindestens einen Ausgang (32a) (32'a) (32"a) durch ein oder mehrere empfindliche Elemente (34) aufgenommen wird, die im Vergleich zu dem Rotor (62) entfernt angeordnet sind und die gemäß der Veränderung der Induktanz der Windungen (51) variabel sind.

2. Vorrichtung (30) (30') (30") nach Anspruch 1, wobei das elektrische Signal (a(t)) zeitlich variiert abhängig von den Schwingungen des Rotors (62) der Drehmaschine (60); wobei die Schwingungen des Rotors (62) eine Veränderung der Größe zumindest eines Teils des Luftspalts (54c) bewirken.

3. Vorrichtung (30) (30') (30") nach Anspruch 2, wobei der Luftspalt (54c) im Wesentlichen ringförmig ist; wobei der erste Teil (54a) im Wesentlichen ringförmig und innen ist im Vergleich zu dem zweiten Teil (54b), und wobei die Mehrzahl von Windungen (51) um den zweiten Teil (54b) des Magnetkreises (54) angeordnet ist.

4. Vorrichtung (30) nach Anspruch 3, wobei die Signalverarbeitungseinrichtungen (31) eine Mehrzahl von Signalverarbeitungsstufen (40, 41) umfassen, um eine Schätzung der Position des Rotors (62) der Drehmaschine (60) auf der Basis der durch ein oder mehrere empfindliche Elemente (34) vorgesehenen Messungen zu erzeugen, sowie zur Steuerung der Verstärkungseinrichtungen (32) auf der Basis der Schätzung.

5. Vorrichtung (30) nach Anspruch 4, wobei die Mehrzahl von Signalverarbeitungsstufen (40, 41) eine Beobachtungsstufe (40) und eine Ausgleichsstufe (41) umfasst; wobei die Beobachtungsstufe (40) eine Mehrzahl von Eingängen (40i) und einen Ausgang (40o) aufweist; wobei der Ausgang (40o) elektrisch mit einem Knoten (42) verbunden ist, der durch einen Ausgang (41o) der Ausgleichsstufe (41) versorgt wird; wobei die Ausgleichsstufe (41) ferner einen Eingang umfasst, der direkt durch den Ausgang (40o) der Beobachtungsstufe (40) versorgt wird; wobei der Knoten (42) ferner über eine Leitung (43) mit dem Eingang des Verstärkers (32) elektrisch verbunden ist.

6. Vorrichtung (30) nach Anspruch 5, wobei die Mehrzahl von Eingängen (40i) der Beobachtungsstufe (40) einen ersten Eingang umfasst, der durch den Knoten (42) versorgt wird, und einen zweiten Eingang, der durch das sensible Element (34) versorgt wird.

7. Vorrichtung (30) nach Anspruch 6, wobei die Ausgleichsstufe (41) ihren Ausgang (41o) mit dem Signal (b(t)) versorgt, und wobei das allgemeine Verhalten eines allgemeinen Systems (100), das aus dem elektromagnetischen Dämpfer (50), der Drehmaschine (60) und dem Verstärker (32) gebildet wird, standardisiert wird durch eine Mehrzahl von Betriebszuständen, von denen zumindest ein Teil durch eines oder mehrere sensible Elemente (34) gemessen wird, und wobei die Beobachtungsstufe (40) einen Wertevektor ($\hat{X}$) berechnet, der eine Schätzung und eine verwandte Ableitung zumindest eines Teils der Mehrzahl von Betriebszuständen des allgemeinen Systems (100) aufweist, abhängig von einer Mehrzahl von Multiplikationsmatrizenwerten (A, B, C, L, K), und wobei die Ausgleichsstufe (41) das Signal b(t) durch Multiplizieren des Wertevektors ($\hat{X}$) mit einem Vektor (k) der Ausgleichskoeffizienten erzeugt.

8. Vorrichtung (30') (30") nach Anspruch 3, wobei die Signalverarbeitungseinrichtungen (31) den Eingang der Verstärkungseinrichtungen (32') (32") auf der Basis einer periodischen Oszillation des Signals (a(t)) versorgen können, und wobei die Verstärkungseinrichtungen (32') (32") einen Schalttyp aufweisen.

9. Vorrichtung (30') nach Anspruch 8, wobei die Verstärkungseinrichtungen (32') einen Pulsbreitenmodulationstyp aufweisen und die Ausgänge (32'a) der Verstärkungseinrichtungen (32') mit einem elektrischen Signal versorgen, **gekennzeichnet durch** eine elektrische Spannung mit einem ersten Logikpegel und einem sich unterscheidenden zweiten Logikpegel, wobei zwischen den Pegeln gewechselt wird.

10. Vorrichtung (30') nach Anspruch 9, wobei die sensiblen Elemente (34) einen Eingang einer Filterstufe (36) versorgen, die einen Ausgang aufweist, der an dessen Eingang mit den Signalverarbeitungseinrichtungen (31') verbunden ist; wobei die Filterstufe (36) einen Filter (36f) umfasst, mit einem Ausgang, der mit einem Eingang eines Modulator/Demodulations-Blocks (36d) verbunden ist; wobei der Filter (36f) als Ausgabe einen Teil des Signals (a(t)) übermittelt, der sich auf die durch die Signalverarbeitungseinrichtungen (31') ausgeführte Steuerung mittels frequenzselektivem Filtern bezieht.

11. Vorrichtung (30") nach Anspruch 8, ferner umfassend einen Frequenzidentifikationsblock (37), und wobei der Verstärker (32") ein Hystereseverstärker ist; wobei der Frequenzidentifikationsblock (37) einen Eingang aufweist, der direkt mit den sensiblen Elementen (34) verbunden ist, und einen Ausgang, der direkt mit dem Signalverarbeitungsblock (31") verbunden ist.

12. Steuerverfahren für einen elektromagnetischen Dämpfer von Schwingungen (50) mit einer Mehrzahl von Windungen (51), die um einen Rotor (62) einer Drehmaschine (60) angeordnet sind und durch ein elektrisches Signal versorgt werden; wobei der elektromagnetische Dämpfer von Schwingungen ferner einen Magnetkreis (54) aufweist, der durch einen ersten Teil (54a) und einen zweiten Teil (54b) gebildet wird, die voneinander durch einen Luftspalt (54c) getrennt sind; wobei das Verfahren einen Schritt der Steuerung der Verstärkungseinrichtungen (32) (32') (32") einer Vorrichtung (30) (30') (30") umfasst, wobei die Verstärkungseinrichtungen (32) (32') (32") die Mehrzahl von Windungen (51) versorgen können und mit den Signalverarbeitungseinrichtungen (31) (31') (31") verbunden sind; wobei das Verfahren **gekennzeichnet ist durch** einen Schritt des Sendens eines Signals (b(t)) von den Signalverarbeitungseinrichtungen (31) (31') (31") an die Verstärkungseinrichtungen (32) (32') (32"), abhängig von einem Spannungs- und/oder einem Stromsignal (a(t)), das an mindestens einem Ausgang (32a) (32'a) (32"a) **durch** ein oder mehrere empfindliche Elemente (34) aufgenommen wird, die im Vergleich zu dem Rotor (62) entfernt angeordnet sind.

13. Verfahren nach Anspruch 12, wobei das Signal (a(t)) modifiziert wird durch die Induktanzschwankung der Mehrzahl von Windungen (51).

14. Verfahren nach Anspruch 12, wobei dieses ferner die folgenden Schritte umfasst:

- Standardisieren des Verhaltens eines allgemeinen Systems, das aus dem elektromagnetischen Dämpfer (50), der Drehmaschine (60) und dem Verstärker (32) gebildet wird, durch eine Mehrzahl von Betriebszuständen, von denen zumindest ein Teil durch eines oder mehrere sensible Elemente (34) gemessen wird; und
- Berechnen einer Schätzung der zukünftigen Position des Rotors (62) durch die Signalverarbeitungseinrichtungen (31).

15. Verfahren nach Anspruch 14, wobei der Schritt des Berechnens einer Schätzung durch die Signalverarbeitungseinrichtungen (31) durchgeführt wird durch:

- einen ersten Schritt, der das Berechnen eines Wertevektors ($\hat{X}$) umfasst, der eine Schätzung und eine verwandte Ableitung zumindest eines Teils der Mehrzahl von Betriebszuständen des allgemeinen Systems (100) aufweist, abhängig von einer Mehrzahl von Multiplikationsmatrizenwerten (A, B, C, L, K); wobei das Berechnen durch eine Beobachtungsstufe (40) betrieben wird;
- einen folgenden Schritt des Berechnens, wobei durch eine Ausgleichsstufe (41) das Signal b(t) durch Multiplizieren des Wertevektors ($\hat{X}$) mit einem Vektor (K) von Ausgleichskoeffizienten erzeugt wird.

16. Verfahren nach Anspruch 12, wobei die Eingabe, welche die Verstärkungseinrichtungen (32') (32") versorgt, ausgeführt wird durch die Signalverarbeitungseinrichtungen (31') (31 "), die eine periodische Oszillation des Signals (a(t)) berücksichtigen, und wobei die Verstärkungseinrichtungen (32') (32") einen Schalttyp aufweisen.

17. Verfahren nach Anspruch 16, ferner umfassend einen Schritt des Versorgens der Windungen durch Verstärkungseinrichtungen (32') des Pulsbreitenmodulationstyps (PWM), die ihre Ausgänge (32'a) mit einem elektrischen Signal mit einer Spannung versorgen, **gekennzeichnet durch** einen ersten Logikpegel und einen sich unterscheidenden zweiten Logikpegel, wobei zwischen den Pegeln gewechselt wird.

18. Verfahren nach Anspruch 16, wobei:

- die Windungen (51) durch Hystereseverstärkungseinrichtungen (32") versorgt werden, welche ihre Ausgänge (32"a) mit einem Signal (b(t)) versorgen, das eine Spannung aufweist, die zwischen einem ersten positiven Logikwert und einem zweiten negativen Logikwert auf der Basis des Überlaufs eines Höchst- und Mindestwertes des entsprechend von den Windungen (51) absorbierten Stroms umschaltet; und wobei
- ein Schritt des Analysierens einer Schwankungsfrequenz des von den Windungen (51) absorbierten elektrischen Stroms durch einen Frequenzidentifikationsblock (37) vorgesehen durch die sensiblen Elemente (34) existiert; wobei die Schwankungsfrequenz des elektrischen Stroms umgekehrt proportional ist zu der Schwingung des Rotors (62).

19. Computerprogramm, das Codemittel umfasst, die angepasst sind für eine Ausführung aller in Anspruch 12 definierten Schritte, wobei die Signalverarbeitungseinrichtungen (31) (31') (31") zur Verarbeitung des Signals (a(t)) zumindest teilweise vom Softwaretyp sind.

**Revendications**

1. Dispositif de commande automatique (30) (30') (30") pour un amortisseur électromagnétique de vibrations (50) ayant une pluralité d'enroulements (51) disposés autour d'un rotor (62) d'une machine tournante (60) et alimentés par un signal électrique ; ledit amortisseur électromagnétique de vibrations ayant également un circuit magnétique (54), constitué d'une première partie (54a) et d'une seconde partie (54b) séparées entre elles par un entrefer (54c) ; le dispositif de commande automatique (30) (30') (30") comprend :

des moyens d'amplification (32) (32') (32") pour alimenter ladite pluralité d'enroulements (51) et ayant au moins une sortie (32a), (32'a) (32"a) ; et

des moyens de traitement de signal (31) (31') (31 ") connectés électriquement auxdits moyens d'amplification (32) (32') (32") ; le dispositif de commande automatique (30) (30') (30") est **caractérisé en ce que** lesdits moyens de traitement de signal (31) (31') (31 ") alimentent lesdits moyens d'amplification (32) (32') (32") sur la base d'un signal électrique *(a(t))* de tension et/ou courant tiré sur ladite au moins une sortie (32a), (32'a) (32"a) par un ou plusieurs éléments sensibles (34) à distance par rapport audit rotor (62) et variable alors qu'une inductance desdits enroulements (51) varie.

2. Dispositif (30) (30') (30") selon la revendication 1, dans lequel ledit signal électrique *(a(t))* varie dans le temps en fonction des vibrations dudit rotor (62) de ladite machine tournante (60) ; lesdites vibrations dudit rotor (62) provoquant une variation de la taille d'au moins une partie dudit entrefer (54c).

3. Dispositif (30) (30') (30") selon la revendication 2, dans lequel ledit entrefer (54c) est sensiblement annulaire ; dans lequel ladite première partie (54a) est sensiblement annulaire et interne par rapport à ladite seconde partie (54b) et dans lequel ladite pluralité d'enroulements (51) est disposée autour de ladite seconde partie (54b) du circuit magnétique (54).

4. Dispositif (30) selon la revendication 3, dans lequel lesdits moyens de traitement de signal (31) comprennent une pluralité d'étages de traitement de signal (40, 41) pour générer une estimation de la position du rotor (62) de ladite machine tournante (60) en fonction des mesures fournies par ledit au moins un élément sensible (34) et également pour piloter lesdits moyens d'amplification (32) en fonction de ladite estimation.

5. Dispositif (30) selon la revendication 4, dans lequel ladite pluralité d'étages de traitement de signal (40, 41) comprend un étage d'observation (40) et un étage de compensation (41) ; ledit étage d'observation (40) ayant une pluralité d'entrées (40i) et une sortie (40o) ; ladite sortie (40o) étant connectée électriquement à un noeud (42) alimenté par une sortie (41o) dudit étage de compensation (41) ; ledit étage de compensation (41) comprenant également une entrée directement alimentée par ladite sortie (40o) dudit étage d'observation (40) ; ledit noeud (42) étant également connecté électriquement à l'entrée dudit amplificateur (32) au moyen d'une ligne (43).

6. Dispositif (30) selon la revendication 5, dans lequel ladite pluralité d'entrées (40i) dudit étage d'observation (40) comprend une première entrée alimentée par ledit noeud (42) et une seconde entrée alimentée par ledit élément sensible (34).

7. Dispositif (30) selon la revendication 6, dans lequel ledit étage de compensation (41) alimente ladite sortie (41o) avec ledit signal *(b(t))* et dans lequel le comportement général d'un système général (100) constituée par l'amortisseur électromagnétique (50), par la machine tournante (60) et par ledit amplificateur (32) est normalisé au moyen d'une pluralité d'états de fonctionnement dont au moins une partie est mesurée par ledit au moins un élément sensible (34) et dans lequel ladite étape d'observation (40) calcule un vecteur de valseurs $(\hat{X})$ contenant une estimation et un dérivé connexe d'au moins une partie de ladite pluralité d'états de fonctionnement dudit système général (100) en fonction d'une pluralité de paramètres matriciels de multiplication (A, B, C, L, K) et dans lequel ledit étage de compensation (41) génère ledit signal $b(t)$ en multipliant ledit vecteur de valeurs $(\hat{X})$ avec un vecteur (k) de coefficients de compensation.

8. Dispositif (30') (30") selon la revendication 3, dans lequel lesdits moyens de traitement de signal (31) sont aptes à alimenter l'entrée desdits moyens d'amplification (32') (32") en fonction d'une oscillation périodique dudit signal *(a(t))*, et dans lequel lesdits moyens d'amplification (32') (32") sont du type à commutation.

**9.** Dispositif (30') selon la revendication 8, dans lequel lesdits moyens d'amplification (32') sont d'un type à modulation d'impulsions en durée et fournissent aux sorties (32'a) desdits moyens d'amplification (32') un signal électrique **caractérisé par** une tension électrique ayant un premier niveau logique et un second niveau logique différents et alternant entre eux.

**10.** Dispositif (30') selon la revendication 9, dans lequel lesdits éléments sensibles (34) alimentent une entrée d'un étage de filtrage (36) ayant une sortie reliée à son entrée vers lesdits moyens de traitement de signal (31') ; ledit étage de filtrage (36) comprenant un filtre (36f) ayant une sortie reliée à une entrée d'un bloc modulateur/démodulateur (36d) ; ledit filtre (36f) transmet comme sortie une partie dudit signal *(a(t))* associée à la commande exécutée par lesdits moyens de traitement de signal (31') au moyen d'un filtrage sélectif en fréquence.

**11.** Dispositif (30") selon la revendication 8, comprenant en outre un bloc d'identification de fréquence (37) et dans lequel ledit amplificateur (32") est un amplificateur à hystérésis ; ledit bloc d'identification de fréquence (37) ayant une entrée directement reliée auxdits éléments sensibles (34) et une sortie directement reliée audit bloc de traitement de signal (31").

**12.** Procédé de commande pour un amortisseur électromagnétique de vibrations (50) ayant une pluralité d'enroulements (51) disposés autour d'un rotor (62) d'une machine tournante (60) et alimenté par un signal électrique ; ledit amortisseur électromagnétique de vibrations ayant également un circuit magnétique (54), constitué d'une première partie (54a) et d'une seconde partie (54b), séparées entre elles par un entrefer (54c) ; ledit procédé comprenant une étape de commande de moyens d'amplification (32) (32') (32") d'un dispositif (30) (30') (30"), lesdits moyens d'amplification (32) (32') (32") étant aptes à alimenter ladite pluralité d'enroulements (51) et étant reliés aux moyens de traitement de signal (31) (31') (31") ; ledit procédé étant **caractérisé par** une étape consistant à envoyer un signal *(b(t))* des moyens de traitement de signal (31) (31') (31") auxdits moyens d'amplification (32) (32') (32"), en fonction d'un signal de tension et/ou de courant *(a(t))* tiré sur au moins une sortie (32a), (32'a) (32"a) desdits moyens d'amplification (32) (32') (32") au moyen d'au moins un élément sensible (34) à distance par rapport audit rotor (62).

**13.** Procédé selon la revendication 12, dans lequel ledit signal *(a(t))* est modifié par la variation de l'inductance de ladite pluralité d'enroulements (51).

**14.** Procédé selon la revendication 12, comprenant en outre les étapes consistant à :

normaliser le comportement d'un système général (100) constitué par l'amortisseur électromagnétique (50), par la machine tournante (60) et par ledit amplificateur (32) au moyen d'une pluralité d'états de fonctionnement dont au moins une partie est mesurée par ledit au moins élément sensible (34) ; et
calculer une estimation de la position future dudit rotor (62) au moyen desdits moyens de traitement de signal (31) ;

**15.** Procédé selon la revendication 14, dans lequel ledit calcul d'estimation est effectué par lesdits moyens de traitement de signal (31) au moyen de :

une première étape comprenant le calcul d'un vecteur de valeurs $(\hat{X})$ contenant une estimation et dérivé connexe d'au moins une partie de ladite pluralité d'états de fonctionnement dudit système général (100) en fonction d'une pluralité de paramètres matriciels et/ou vectoriels de multiplication (A, B, C, L, K) ; ledit calcul étant effectué par un étage d'observation (40) ;
une étape de calcul ultérieure dans laquelle, au moyen d'un étage de compensation (41), ledit signal *b(t)* est généré en multipliant ledit vecteur de valeurs $(\hat{X})$ par un vecteur (K) de coefficients de compensation.

**16.** Procédé selon la revendication 12, dans lequel l'entrée alimentant lesdits moyens d'amplification (32') (32") est réalisée par lesdits moyens de traitement de signal (31') (31") qui prennent en compte une oscillation périodique dudit signal *(a(t))* et dans lequel lesdits moyens d'amplification (32') (32") sont d'un type à commutation.

**17.** Procédé selon la revendication 16, comprenant en outre une étape consistant à alimenter lesdits enroulements par l'intermédiaire desdits moyens d'amplification (32') d'un type à modulation d'impulsions en durée (PWM), qui fournissent leurs sorties (32'a) par l'intermédiaire d'un signal électrique ayant une tension **caractérisée par** un premier niveau logique et un second niveau logique différents et alternant entre eux.

**18.** Procédé selon la revendication 16, dans lequel :

lesdits enroulements (51) sont alimentés par des moyens d'amplification à hystérésis (32") qui alimentent leurs sorties (32"a) avec un signal *(b(t))* ayant une tension qui commute entre une première valeur logique positive et une seconde valeur logique négative en fonction du dépassement d'une valeur minimum et maximum de courant absorbé par lesdits enroulements (51) respectivement ; et dans lequel

une étape d'analyse d'une fréquence de variation du courant électrique absorbé par les enroulements (51) au moyen d'un bloc d'identification de fréquence (37) alimenté par lesdits éléments sensibles (34) est présente ; ladite fréquence de variation dudit courant électrique étant inversement proportionnelle aux vibrations dudit rotor (62).

19. Programme informatique comprenant des moyens de code réglés pour exécuter toutes les étapes définies à la revendication 12, dans lequel lesdits moyens de traitement de signal (31) (31') (31 "), pour traiter ledit signal *(a(t))* sont au moins partiellement du type logiciel.

Fig. 1

Fig. 2

EP 2 433 029 B1

52

63

54a

54b

51

X

65

64

**Fig. 4**

100

61

54a

32

32a

51

54b

43

b(t)

34

42

41o

30

b(t)

41

-K

‖x̂‖

40

OBSERVER

40i

40o

31

**Fig. 3**

Fig. 5

Fig. 6

Fig. 7

Fig. 8

Fig. 9

Fig. 11

Fig. 10

EP 2 433 029 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5126641 A